(19) Europäisches Patentamt
European Patent Office
Office européen des brevets

(11) **EP 1 705 846 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(51) Int Cl.:
***H04M 11/00*** *(2006.01)*

(21) Anmeldenummer: **06005142.2**

(22) Anmeldetag: **14.03.2006**

(54) **Verfahren zur funkgestützten Übertragung von Daten und Verbrauchserfassungsgerät**

Method for wireless transmission of data and electronic utility meter

Méthode pour la transmission sans fil de données et compteur de consommation électronique

(84) Benannte Vertragsstaaten:
**AT CH DE LI**

(30) Priorität: **24.03.2005 DE 102005013638**

(43) Veröffentlichungstag der Anmeldung:
**27.09.2006 Patentblatt 2006/39**

(73) Patentinhaber: **Techem Energy Services GmbH**
**65760 Eschborn (DE)**

(72) Erfinder: **Simon, Winfried**
**64579 Gernsheim (DE)**

(74) Vertreter: **KEIL & SCHAAFHAUSEN**
**Patentanwälte**
**Cronstettenstrasse 66**
**60322 Frankfurt am Main (DE)**

(56) Entgegenhaltungen:
**EP-A- 0 613 257          EP-A- 0 674 400**
**RU-C1- 2 107 996        US-A1- 2003 123 406**

## Beschreibung

Die Erfindung betrifft ein Verfahren zur funkgestützten Übertragung von Daten gemäß dem Oberbegriff des Anspruchs 1 sowie ein entsprechend eingerichtetes Verbrauchserfassungsgerät gemäß dem Oberbegriff des Anspruchs 5.

In bekannten Verbrauchserfassungssystemen, bei denen die erfassten Verbrauchsdaten per Funk von fest montierten Verbrauchserfassungsgeräten mit entsprechenden Sensoren zu fest montierten oder mobilen Empfängern gesendet werden, erfolgt die Übertragung üblicherweise mit einer Frequenz von 433 Megahertz (MHz) oder neuerdings auch 868 MHz bei Datenraten von beispielsweise 20.000 Bit/Sekunde (Bit/s) (Referenz Euronorm TC 294). Um alle zu übertragenden Daten in einem Datentelegramm übertragen zu können, muss das Datentelegramm bei diesen Datenraten vergleichsweise lang sein. Häufig beträgt die zeitliche Länge eines Datentelegramms etwa 50 Millisekunden (ms). Derartige Datentelegrammlängen führen bei der Energieversorgung der häufig batteriebetriebenen Verbrauchserfassungsgeräte aber zu Problemen. Aus der US 5,844,942 A ist es bekannt, einen zu übertragenden Datensatz in vorzugsweise zwei Datenpakte aufzuteilen und nacheinander auszusenden, um das Fading, d.h. die durch Interferenz verursachten Schwankungen in der Empfangsfeldstärke, zu vermindern. Dabei wird jedes der beiden Datenpakete von einer Vielzahl zusätzlicher Synchronisations- und Prüfinformationen umgeben.

Die Verbrauchserfassungsgeräte werden typischerweise von Lithium Langzeitbatterien bei einer Nennspannung von 3 Volt (V) versorgt. Diese Batterien sind preiswert und weisen eine extrem niedrige Selbstentladung auf, so dass eine Lebensdauer von 10 Jahren und mehr für die Verbrauchserfassungsgeräte möglich ist. Die Batterien besitzen einen Innenwiderstand von einigen 10 bis einigen 100 Ohm, welcher während der Einsatzdauer noch zunimmt und bei der Entwicklung der Schaltung berücksichtigt werden muss. Solange keine Datenübertragung stattfindet, bleibt der Stromverbrauch einer üblichen Schaltung eines Verbrauchserfassungsgeräts mit Messwerterfassung, Mikroprozessor und Anzeige deutlich unter beispielsweise 1 Milliampere (mA), so dass der Innenwiderstand kein Problem darstellt. Schwierig wird es dann, wenn ein Datentelegramm als Funktelegramm abgesetzt werden soll, denn die Sender verbrauchen viel Strom (beispielsweise 20 mA). Dieser Strom würde während der Aussendung des Datentelegramms, die mit beispielsweise 50 ms vergleichsweise lang dauert, einen derart hohen Spannungseinbruch in der Versorgungsspannung des Verbrauchserfassungsgeräts verursachen, dass der Sender außer Takt geraten würde. Außerdem könnte der Mikroprozessor in einen undefinierten Zustand kommen. Das Verbrauchserfassungsgerät wäre defekt und müsste ausgetauscht werden.

Um dieses Problem zu umgehen, kann in einem Verbrauchserfassungsgerät ein Pufferkondensator mit einer Ladungspumpe und nachgeschalteter Versorgungsspannungsregelung eingesetzt werden. Durch eine geeignete Schaltung wird der Pufferkondensator zunächst auf eine hohe Spannung (beispielsweise 10 V) aufgeladen. Der nachgeschaltete Regler hält die Versorgungsspannung des Senders dann konstant auf der benötigten Versorgungsspannung von beispielsweise 3 V. Die zur Sendung des Datentelegramms notwendige Energie wird dem vorher aufgeladenen Pufferkondensator entnommen. Mit dieser Technik wird die maximale Stromaufnahme aus der Batterie auf beispielsweise 1 mA begrenzt und die gefürchteten Spannungseinbrüche bleiben aus. Diese in der Praxis häufig eingesetzte Technik hat allerdings auch Nachteile: Insbesondere wird durch die Pumpschaltung der Wirkungsgrad des Senders enorm verschlechtert. Man darf aus verschiedenen Gründen nicht mehr als 2% - 20% Wirkungsgrad erwarten. Weiterhin erhöhen sich der Bauteileaufwand und damit die Kosten der Schaltung des Verbrauchserfassungsgeräts. Der Platzbedarf und die ansteigende Komplexität des Gebildes sind auch zu erwähnen.

Alternativ werden auch andere Batterietypen eingesetzt. Gewickelte Lithiumzellen mit extrem niedrigem Innenwiderstand sind jedoch relativ teuer und weisen eine wesentlich höhere Selbstentladung auf als die hochohmigeren Typen. Eine andere Alternative ist der Einsatz von 3,6V (Lithium-Thionyl-Chlorid) Systemen mit Pufferkondensator ohne Pumpe. Der zur Verfügung stehende Spannungshub und damit auch die Energie für den Sender sind hier jedoch begrenzt. Daher müssen im Falle einer Verbrauchswerterfassung mit stationären Systemen entsprechend viele Empfänger in einem vergleichsweise engen Netz über das zu erfassende Gebäude verteilt werden, wodurch sich die Installationskosten erhöhen. Neben der höheren Selbstentladung der Batterien und dem gesteigerten Kostenaufwand hat diese Lösung also auch den Nachteil der höheren Lageabhängigkeit der einzelnen Geräte in dem Verbrauchserfassungssystem und schlechterer Umweltverträglichkeit aufgrund des verwendeten Batterietyps.

Weiterhin sind Systeme zur funkunterstützten Übertragung von Daten mit hoher Datenrate (beispielsweise 70.000 Bit/s), entsprechend großer Bandbreite und kurzen Datentelegrammen (beispielsweise 10 ms) bekannt. Die Spannungsversorgung dieser Schaltung ist auch für hochohmige Spannungsquellen einfach. Ein parallel zur Batterie geschalteter Pufferkondensator von beispielsweise 1000 Mikrofarad (μF) liefert kurzzeitig die zur Aussendung benötigte Energie. Derartige Schaltungen sind bspw. aus der EP 0 674 400 B1, der EP 0 613 257 A2 oder der DE 296 05 699 U1 bekannt. Für wesentlich längere Datentelegramme ist sind diese einfachen Schaltungen jedoch nicht geeignet. Dier Kondensator kann nicht wesentlich vergrößert werden, da das Bauvolumen stark zunehmen würde, die Kosten nicht akzeptabel wären und Leckströme die Batterie entladen würden. Die Sendedauer ist daher so weit reduziert, dass sich der Spannungseinbruch in Grenzen hält und der sichere Betrieb der Schaltung gerade noch gewährleistet wird. Um die Daten übertragen zu können, wird daher die Datenübertragungsrate (kurz: Datenrate) hochgesetzt, so dass trotz der kurzen Telegrammdauer die zu übertragenden Daten in dem Datentelegramm zusammengefasst werden können.

Die Erzeugung so hoher Übertragungsraten ist mit preiswerten Mikroprozessoren bei dem geforderten, sehr niedrigen Stromverbrauch schwierig. Die hohe Übertragungsrate erzwingt ein breites Funkspektrum und vermindert dadurch die erzielbare Reichweite, die mit zunehmender Bandbreite abnimmt. Die erreichbare Systemdynamik (Sendeleistung / Empfangsempfindlichkeit) dieser Lösung ist also vergleichsweise schlecht, so dass auch bei dieser Lösung ein enges Netz von Empfängern eingesetzt werden muss. Aufgrund dieser schlechten erzielbaren Reichweite ist auch ein solches Funkerfassungssystem nicht ausreichend wirtschaftlich.

Die EP 0 613 257 A2 beschreibt anhand des Beispiels eines batteriebetriebenen GSM-Kommunikationssystems ein Time-Division-Multiplex-System (TDMA) zur Funkübertragung mit einem Energieversorgungsschaltkreis, der die Ausgangsspannung einer Batterie mittels eines DC/DC-Konverters zeitweise erhöht. Dazu wird die Energie in einem Kondensator gespeichert, die gespeicherte Energie entladen und dem Übertragungssystem zugeführt. Wenn keine Übertragung stattfindet, wird die Ausgangsspannung der Batterie in dem Kondensator gespeichert, um die für die Übertragung zur Verfügung stehende Spannung zu erhöhen. Wie in einen Multiplex-System üblich, werden die Daten auf mehrere Datenpakete aufgeteilt übertragen, deren Anzahl im Rahmen des Multiplexing festgelegt wird. Ein ähnliches Konzept zur Energieversorgung eines Funkgeräts wird in der EP 0 674 400 A1 offenbart. Dort ist ein Kondensator parallel zur Endstufe der Sende-/Empfangseinrichtung geschaltet, der mit einem Konstantstrom auf eine bestimmte Spannung aufgeladen und während der Aussendung der Sendebursts entladen wird.

Die US 2003/0123406 A1 ein Verfahren zur Einstellung einer Downlink-Datenrate, die nach Maßgabe eines bestimmten Signal-zu-Rauschverhältnis eingestellt wird, um empirisch einen spezifizierten Grenzwert einer Paketfehlerrate zu erreichen. Auch die RU 2 107 996 C1 beschreibt einen Zusammenhang zwischen einer Datenübertragungsrate und einem gewünschten Signal zu Rauschverhältnis im Eingang eines Empfängers.

Die Aufgabe der Erfindung liegt daher darin, eine Möglichkeit zur funkgestützten Übertragung von insbesondere Verbrauchsdaten vorzuschlagen, die mit einfachen zur Verfügung stehenden Technologien hohe nutzbare Reichweiten erreicht und mit den üblichen Langzeitbatterien betrieben werden kann, so dass mit dem System niedrige Herstellungs- und Betriebskosten realisiert werden können.

Diese Aufgabe wird bei einem Verfahren der eingangs genannten Art mit den Merkmalen des Anspruchs 1 gelöst. Dabei werden die Daten insbesondere mit niedriger Datenrate und auf mehrere Datentelegramme aufgeteilt übertragen, wobei der Pufferkondensator zwischen der Aussendung zweier aufeinanderfolgender Datentelegramme wieder aufgeladen wird. Die Aussendungen mit niedriger Datenrate (schmalbandig) können entweder klassisch (geringe Modulationfrequenz) oder durch andere (z.B. Spread-Spectrum) Verfahren erzeugt werden. Die Erfindung ist in jedem Fall einsetzbar.

Bei dieser Lösung wird erfindungsgemäß ausgenutzt, dass die Rauschleistung eines Funksignals mit niedrigerer Bandbreite abnimmt. Dieser Zusammenhang zwischen gewählter Datenrate, notwendiger Bandbreite der Funkübertragung und der erzielbaren Reichweite wird nachfolgend erläutert. Die Bandbreite einer Übertragungsstrecke hängt eng mit der gewählten Datenübertragungsrate oder kurz Datenrate zusammen. Bei frequenzmodulierten Signalen bezeichnet man die Änderung der Trägerfrequenz mit $\Delta f_T$. Die Signalfrequenz $f_s$ ist mit einem Faktor je nach verwendeter Kanalkodierung (Manchester, NRZ, usw.) eng mit der Datenrate verknüpft. Für die Bandbreite $\Delta f$ eines frequenzmodulierten Signals gilt näherungsweise die *Carson-Formel:*

$$\Delta f = 2 \cdot (\Delta f_T + f_S).$$

Die Rauschleistung zu einer gegebenen Bandbreite lässt sich mit der Nyquist-Formel herleiten:

$$\sqrt{\overline{u}^2} = \sqrt{4kTR\Delta f},$$

wobei k die Boltzmann-Konstante in Joule pro Kelvin, T die Temperatur in Kelvin des Leiters, $\Delta f$ die Bandbreite in Hertz und R der Widerstand des Leiters ist. Die Rauschleistung wächst also mit zunehmender Bandbreite. Dies bedeutet im Umkehrschluss, dass schmalbandige Signale - bei geeignetem Aufbau - im Empfänger weniger Rauschleistung erzeugen und damit ein günstigeres Signal/Rausch Verhältnis erreichen. Praktisch kann dies ausgenutzt werden, indem empfindlichere Empfänger eingesetzt werden. Da bei gleicher Sendeleistung die nutzbare Systemdynamik und damit die erzielbare Reichweite entsprechend steigt, wird dadurch die Systemperformance insgesamt verbessert.

Die Erfindung sieht daher vor, dass die Nutzdaten, d.h. die zu übertragenden Daten bzw. Verbrauchswerte, auf mehrere zeitlich kurze Datentelegramme (Subtelegramme) bei niedriger Datenrate verteilt werden. Zwischen den Aussendungen wird der zur Spannungsversorgung parallelgeschaltete Pufferkondensator aufgeladen, um dann anschließend das nächste kurze Subtelegramm zu senden. Insbesondere kann der Fachmann eine geeignete niedrige Datenrate ermitteln, indem die maximale zeitliche Länge eines Datentelegramms bestimmt wird, für die der Pufferkondensator ohne nachgeschaltete Regelung bzw. Pumpschaltung die benötigte Sendeleistung ohne ein Zusammenbrechen der Versorgungsspannung zur Verfügung stellen kann. Statt wie bisher üblich dann die Datenrate so festzulegen, dass alle zu übertragenden Daten in einem Datentelegramm übertragen werden können, wird die Datenrate durch das gewünschte Signal zu Rauschverhältnis festgelegt, das die Reichweite der Datentelegramme bestimmt. Aus der zeitlichen Länge des Datentelegramms und der Datenrate wird dann die Anzahl der für die zu übertragenden Daten benötigten Datentelegramme (Subtelegramme) bestimmt. Der Begriff "niedrige Datenrate" ist demgemäss so zu verstehen, dass die Datenrate bei vorgegebener zeitlicher Länge eines Datentelegramms so klein gewählt wird, dass die zu übertragenden Daten nicht in einem Datentelegramm übertragen werden können, sondern auf mehrere, vorzugsweise zwischen 5 und 15, einzelne Datentelegramme vorgegebener Länge aufgeteilt werden. Die Datenrate ist also niedrig im Vergleich zu einer Datenrate, bei der alle zu übertragenden Daten in nur einem Datentelegramm übertragen werden können.

Bei dieser erfindungsgemäß schmalbandigeren Funkübertragung kann der Unterschied der erreichbaren Systemdynamik leicht 10 dB oder mehr betragen.

Zur Einsparung von Datentelegrammen werden die mehreren Datentelegramme (Subtelegramme) insbesondere zur Übertragung eines zusammengehörigen Datensatzes in einer genauen zeitlichen Abfolge gesendet. Indem erfindungsgemäß ein strenger zeitlicher Bezug zwischen den Subtelegrammen eingeführt wird, wartet der Sender eine genau definierte Zeit, bevor er das nächste Subtelegramm aussendet. Der Empfänger kennt diese Zeit genau und kann dadurch die Subtelegramme zweifelsfrei zusammensetzen. Hierdurch entfällt die Notwendigkeit der erneuten aufwendigen Synchronisation weitgehend. Die Subtelegramme sind zeitlich zwar getrennt, gehören aber zusammen. Diese Zusammengehörigkeit wird von dem Empfänger aufgrund des vorgegebenen zeitlichen Ablaufs erkannt.

Da aufgrund der zeitlich genau vorgegebenen Abfolge auf eine aufwendige Synchronisation der Datentelegramme ab dem zweiten der mehreren gesendeten Datentelegramme (Subtelegramme) verzichtet werden kann, ist es ausreichend, wenn das erste der mehreren Datentelegramme einen Header oder Preheader mit Informationen zum Aufbau der Funkkommunikation, ein Syncwort zur Synchronisation des Starts der Übertragung von Nutzdaten und ggf. einen Teil der Nutzdaten enthält und die weiteren der mehreren Datentelegramme einen gegenüber dem ersten Datentelegramm verkürzten Header bzw. Preheader und einen vergrößerten Anteil an Nutzdaten enthalten. Auch wenn auf eine erneute Synchronisation in praktischen Fällen nicht ganz verzichtet werden kann, weil mit Uhrenfehlern gerechnet werden und auch die Empfängerschaltung einschwingen muss, wird durch eine signifikante Verkürzung des Headers auf beispielsweise ein oder wenige Byte die in den mehreren Datentelegrammen übertragbare Menge von Nutzdaten signifikant erhöht. Daher können erfindungsgemäß trotz kurzer Funktelegramme und niedriger Datenrate hohe Datenmengen in vergleichsweise wenigen Datentelegrammen übertragen werden.

In einer bevorzugten Ausgestaltung des erfindungsgemäßen Verfahrens zur Funkübertragung von Datentelegrammen für Verbrauchsdaten kann die Datenrate in einem Bereich zwischen etwa 2.000 bis 20.000 Bit/Sekunde liegen. Dementsprechend kann sich die zeitliche Länge der Datentelegramme in einem Bereich zwischen etwa 5 bis 25 Millisekunden bewegen. Aufgrund des zuvor beschriebenen Zusammenhangs ist der Fachmann in der Lage, die Länge der Datentelegramme, die Datenrate und die Anzahl der mehreren Datentelegramme, die einen Satz von Daten übertragen (Subtelegramme), angepasst an die jeweilige Situation (gewünschte Reichweite in einem Gebäude, Kollisionsrate, Beschränkungen der in einem Funkprotokoll erlaubten maximalen Telegrammlänge) einzustellen, so dass die Erfindung auch außerhalb der vorgenannten Zahlenbereiche umgesetzt werden kann. Eine für die Übertragung von Verbrauchswerten eines Heizkostenverteilers in einem hausüblichen Funknetz besonders bevorzugte Konfiguration liegt im Bereich von einer Datentelegrammlänge von etwa 10 ms, einer Datenrate von etwa 2.000 Bit/s und etwa 10 bis 20 Datentelegrammen, in denen die gewünschten Informationen untergebracht werden können.

Vorzugsweise kann die Datenrate zeit- und/oder anwendungsorientiert einstellbar sein. So ist es möglich, die Datenrate und damit die Reichweite der Datentelegramme auch während des laufenden Betriebs anzupassen. Diese variable Anpassung kann besonders vorteilhaft erfolgen, indem ein Verfahren zur Bandspreizung in Form von Kodemultiplex zur Anwendung gebracht wird. Dies kann bspw. zu jahreszeitlich vorgegebenen Zeitpunkten für die Ablesung bei Verbrauchswerten, bei Empfang von Ablesesignalen durch ein portables Ablesegerät, bspw. über eine Infrarot-Schnittstelle, oder durch Vorgabe des Benutzers bspw. durch Knopfdruck oder Menüsteuerung an einer Bedieneinheit erfolgen. Ferner kann für den Fall, dass sich die Reichweite der Datentelegramme in einem Gebäude beispielsweise durch Einziehen einer zusätzlichen Wand verändert, die Datenrate bei einer Wartung herabgesetzt werden, um die Reichweite zu erhöhen. Dies kann besonders einfach durch eine Softwareänderung über eine Service-Schnittstelle, beispielsweise eine Infrarot-Schnittstelle, in dem die Aussendung der Datentelegramme steuernden Mikroprozessor erfolgen. Dabei kann die Software vorzugsweise so konfiguriert sein, dass nach Vorgabe einer Datenrate die Anzahl der benötigten Datentelegramme automatisch angepasst wird.

Gemäß einem weiteren Aspekt betrifft die Erfindung ein Verbrauchserfassungsgerät mit den Merkmalen des Anspruchs 5. Die Aussendung der Datentelegramme wird durch einen Mikroprozessor des Verbrauchserfassungsgeräts gesteuert. Erfindungsgemäß ist vorgesehen, dass in den Mikroprozessor ein Programm zur Durchführung des vorbeschriebenen Verfahrens implementiert ist.

Dabei kann an das Verbrauchserfassungsgerät mindestens ein Sensor zur Erfassung eines Verbrauchswerts und/oder ein Empfänger zum Empfang von Datentelegrammen angeschlossen sein. Der Empfänger dient dem Empfang von Verbrauchswerten anderer Verbrauchserfassungsgeräte, so dass ein mit einem Empfänger ausgestattetes Verbrauchserfassungsgerät insbesondere auch als Datensammler arbeitet, aus dem alle Verbrauchsdaten einer Liegenschaft zusammen ausgelesen werden können.

Zur Einstellung der Datenrate insbesondere durch den Mikroprozessor kann erfindungsgemäß eine Bedieneinheit vorsehen sein, beispielsweise eine Tastatur, eine Menüführung oder eine Schnittstelle zum Anschluss eines Wartungsgerätes, wie eine serielle, eine Funk- oder eine Infrarotschnittstelle.

Weitere Merkmale, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigen:

Fig. 1 schematisch den Aufbau eines erfindungsgemäßen Verbrauchserfassungsgeräts;

Fig. 2 schematisch den zeitlichen Verlauf der Aussendung der Datentelegramme und der Versorgungsspannung des Senders;

Fig. 3 den Aufbau eines typischen Datentelegramms;

Fig. 4 den Aufbau eines typischen Datentelegramms bei Aufteilung in mehrere Subtelegramme gemäß einer ersten Ausführungsform der Erfindung und

Fig. 5 den Aufbau eines typischen Datentelegramms bei Aufteilung in mehrere Subtelegramme gemäß einer zweiten Ausführungsform der Erfindung.

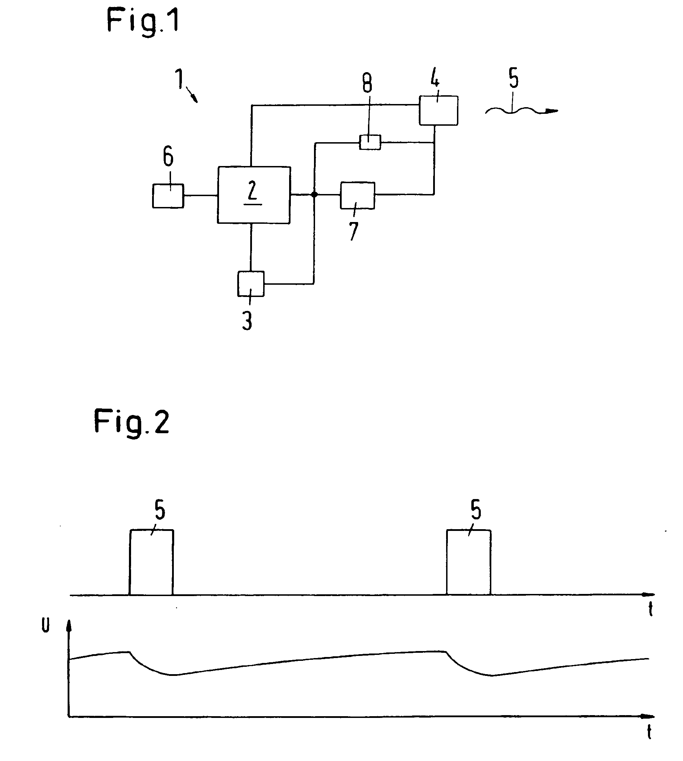

In Fig. 1 ist schematisch ein Verbrauchserfassungsgerät 1 mit einem Mikroprozessor 2 mit integriertem Datenspeicher gezeigt, in dem die zu übertragenden Daten in Form von Verbrauchswerten abgelegt sind. Die Verbrauchswerte wurden von einem an den Mikroprozessor 2 angeschlossenen Sensor 3 erfasst. In einer anderen, nicht dargestellten Ausführungsform kann zusätzlich zu dem oder anstelle des Sensor(s) 3 ein Empfänger vorgesehen sein, mit dem von einem anderen Gerät ausgesendete Daten empfangen werden. Diese werden dann in dem Mikroprozessor 2 gespeichert und ggf. weiter ausgesendet. In einem solchen Fall arbeitet das Gerät 1 auch als Datensammler oder Repeater in einem Funknetz. Die vorliegende Erfindung ist daher nicht auf den Fall der Verbrauchswerterfassung beschränkt, auch wenn sich das erfindungsgemäße Konzept besonders gut für diesen Fall einsetzen lässt.

Der Mikroprozessor 2 ist mit einem Sender 4 zur Aussendung der zu übertragenden Daten in Datentelegrammen 5 und einer Bedieneinheit 6 verbunden. Die Energieversorgung für das Verbrauchserfassungsgerät 1 wird durch eine Langzeitbatterie 7 mit hoher Lebensdauer erreicht, insbesondere einer Lithium Langzeitbatterie, welche die Energie für alle Komponenten 2, 3, 4, 6 des Verbrauchserfassungsgeräts 1 zur Verfügung stellt.

Die Langzeitbatterie 7 weist bei einer Versorgungsspannung von 3 V eine extrem niedrige Selbstentladung auf, so dass diese Batterie 7 insbesondere für Anwendungen geeignet ist, in der lange Wartungsintervalle vorgesehen werden müssen. Solche vergleichsweise kostengünstigen Langzeitbatterien 7 besitzen jedoch einen vergleichsweise hohen Innenwiderstand in Höhe bis zu einigen 100 Ohm, der durch den bei Betrieb des Senders 4 im Vergleich zu der übrigen Zeit vergleichsweise hohen fließenden Strom dazu führen würde, dass die Versorgungsspannung U zusammenbricht.

Um dies zu verhindern, ist ein parallel zu der Langzeitbatterie 7 geschalteter Pufferkondensator 8 vorgesehen, der kurzzeitig die von dem Sender 4 zur Aussendung des Datentelegramms 5 benötigte Energie zur Verfügung stellt. Damit der Abfall der Versorgungsspannung U begrenzt wird, werden die Daten auf mehrere Datentelegramme 5 aufgeteilt übertragen, deren zeitliche Länge so bemessen ist, dass die Versorgungsspannung U nicht zusammenbricht. Zwischen der Aussendung zweier aufeinanderfolgender Datentelegramme 5 wird eine vorgegebene Zeit gewartet, in welcher der Pufferkondensator 8 wieder aufgeladen wird, um für die Aussendung des nächsten Datentelegramms 5 ausreichend Energie zur Verfügung stellen zu können.

Der zeitliche Verlauf der Versorgungsspannung U in dem Verbrauchserfassungsgerät 1 ist in Fig. 2 in Abhängigkeit von der Aussendung der Datentelegramme 5 dargestellt. Dem Kurvenverlauf ist zu entnehmen, dass die Versorgungsspannung U bei Aussendung der Datentelegramme 5 zwar vermindert wird, jedoch nicht unter einen kritischen Wert fällt, der insbesondere die Versorgung des Mikroprozessors 2 nicht mehr sicherstellt.

Der Mikroprozessor 2 hat unter anderem die Aufgabe, den Sender 4 zu steuern und die Aussendung der Datentelegramme 5 zu koordinieren. Bei einen Ausfall des Mikroprozessors 2 wäre also die Datenaussendung nicht sichergestellt und das Verbrauchserfassungsgerät 1 müsste von einem Kundendienst getauscht werden.

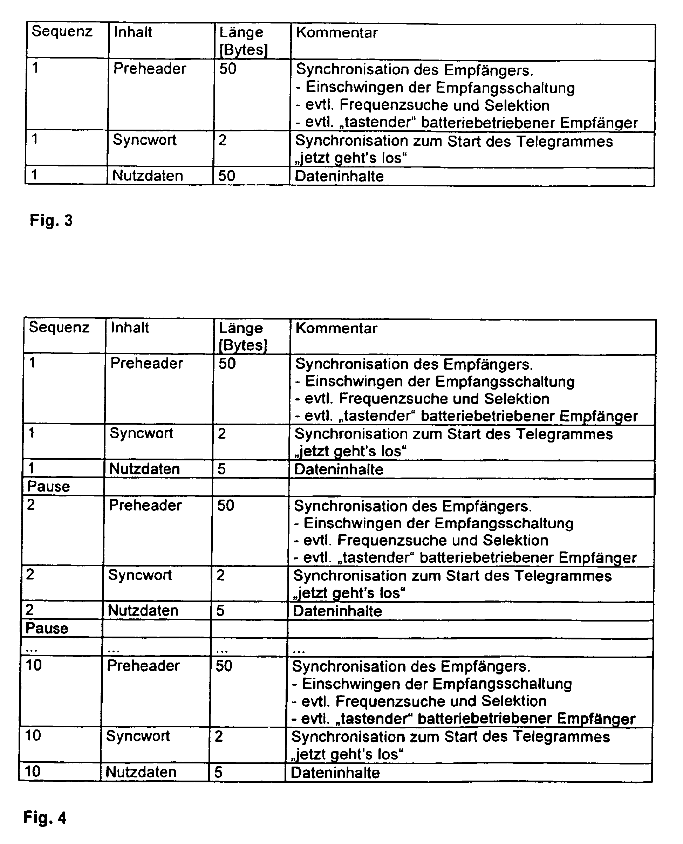

Eine übliches Datentelegramm für die Aussendung der Daten eines Verbrauchserfassungsgeräts beispielsweise für einen batteriebetriebenen Empfänger ist etwa wie in Fig. 3 dargestellt strukturiert. Den Beginn des Datentelegramms bildet ein Header bzw. Preheader, der den eigentlichen, nachfolgend auch als Nutzdaten bezeichneten Daten vorangestellt wird. Darauf folgt ein Syncwort, das die Synchronisation des Starts der Übertragung der Dateninhalte kennzeichnet, die als Nutzdaten dem Syncwort folgen.

Der Preheader hat die Aufgabe der Synchronisation des Empfängers, insbesondere des Einschwingens der Empfangsschaltung sowie eventuell einer Frequenzsuche und Selektion. Insbesondere ein batteriebetriebener Empfänger kann seine Empfangsschaltung nicht ständig betriebsbereit halten, da dies die Batterie zu stark belasten würde. Verbreitete Lösungen takten deshalb die Empfangschaltung: Die Empfangsschaltung wird beispielsweise für 1 ms aktiviert und anschließend für 10ms deaktiviert. Die Empfangsschaltung wird nur dann länger aktiviert, wenn der Empfänger in der kurzen eingeschalteten Zeit Daten empfängt (tastender Empfänger). Der Sender 4 muss diese Zeit (im Beispiel 10 ms) überbrücken und deshalb den relativ langen Preheader aussenden. Dabei sind Preheader und Nutzdaten beispielsweise gleich lang, was zu langen Datentelegrammen führt.

Wenn die Nutzdaten nun auf mehrere Datentelegramme 5 (Subtelegramme) aufgeteilt werden, weist jedes Subtelegramm 5 einen Preheader, ein Syncwort und danach den nächsten Teil der Nutzdaten auf. Diese Datenstruktur ist in Fig. 4 dargestellt, wobei zur Begrenzung der Länge der Datentelegramme 5 der Anteil der Nutzdaten nur noch etwa 10% des Anteils des Preheaders beträgt. Dies ist nur dann sinnvoll zu handhaben, wenn die zu übertragende Datenmenge so klein ist, dass eine Datenübertragung mit einer überschaubaren Anzahl von Datentelegrammen 5 (Subtelegrammen) erreicht werden kann, zumal aufgrund der nicht genau definierten Pausenlänge zwischen den einzelnen Subtelegrammen 5 in jedem Substelegramm 5 in den Nutzdaten auch eine Identifikation für das Datentelegramm 5 enthalten sein muss, damit die Daten wieder eindeutig zusammengesetzt werden kann.

Allerdings sinkt dabei die Übertragungseffektivität, da das Verhältnis von Synchronisationszeit (Preheader + Syncwort) zu Nutzzeit (Nutzdaten) immer ungünstiger wird. Im Grenzfall werden nur noch wenige Bits oder Bytes an Nutzdaten pro Subtelegramm übertragen. In praktischen Anwendungen kommt man sehr schnell zu dem Punkt, dass das Verfahren so nicht mehr anwendbar ist, weil die Kollisionsrate der Datentelegramme 5 zu hoch wird und/oder die Summe der Sendungszeiten alle vernünftigen Grenzen sprengt. Im dargestellten Beispiel werden zehn Datentelegramme (Subtelegramme) 5 benötigt, um die Daten zu übertragen.

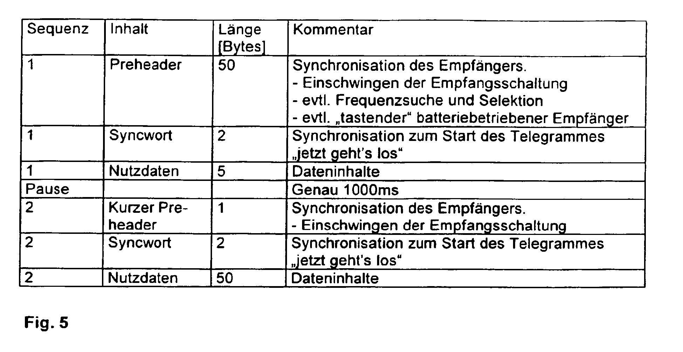

In Fig. 5 wird eine alternative Ausführungsform mit einer Aufteilung in Subtelegramme 5 mit strengem zeitlichen Bezug zueinander dargestellt. Der Sender 4 wartet eine genau definierte Zeit von im Beispiel 1000 ms ab, bevor er das nächste Subtelegramm 5 aussendet. In dieser Zeit kann der Pufferkondensator 8 für die nächste Aussendung ausreichend aufgeladen werden. Der Empfänger kennt diesen genau eingestellten zeitlichen Bezug der zusammengehörigen Subtelegramme 5, so dass er diese zweifelsfrei zusammensetzen kann, ohne dass eine erneute aufwendige Synchronisation zwischen Sender 4 und Empfänger notwendig ist. In diesem Fall kann auch die zusätzliche Identifikation des Datentelegramms 5 in den Nutzdaten verzichtet werden.

Auf eine erneute Synchronisation kann in praktischen Anwendungen jedoch nicht ganz verzichtet werden, da mit Uhrenfehlern in dem Mikroprozessor 2 gerechnet werden und auch die Empfängerschaltung erneut einschwingen muss. Das Verhältnis von Nutzdaten zu Preheader kann ab dem zweiten der mehreren Datentelegramme (Subtelegramme) 5 jedoch zugunsten der Nutzdaten verschoben sein und beispielsweise 50 zu 1 betragen. Durch den definierten zeitlichen Abstand zwischen zwei Subtelegrammen 5 wird es möglich, trotz kurzer Subtelegramme 5 sehr niedrige Datenraten bei vergleichsweise wenigen Subtelegrammen 5 zu realisieren, weil das Verhältnis von Preheader zu Nutzdaten optimiert werden kann.

Die Pause zwischen den Aussendungen wird zur Entwurfszeit festgelegt. Die Länge der Pause wird anhand der Größe des Pufferkondensators 8 und Stromergiebigkeit der Batterie 7 festgelegt.

In manchen Anwendungen ist es wünschenswert, von dem gleichen Verbrauchserfassungsgerät 1 beispielsweise situationsabhängig sowohl Datentelegramme 5 mit hoher Reichweite als auch - bei geringerer Reichweite - mit hohem Dateninhalt aussenden zu lassen. Hierdurch ist es möglich, die gleichen Verbrauchserfassungsgeräte 1 für eine stationäre Auslesung, bei der hohe Reichweite wichtig und häufige Übertragungen unwichtig sind, und eine sogenannte "walk-in / walk-by / drive by" Auslegung mit einem mobilen Empfänger, bei der häufige Übertragungen mit hohem Dateninhalt wichtig und große Reichweiten unwichtig sind, einzusetzen.

Der Sender 4 kann grundsätzlich verteilte Subtelegramme 5 mit geringer Datenrate und vollständige Datentelegramme bei hoher Datenrate senden, sofern er von dem Mikroprozessor 2 entsprechend angesteuert wird. Daher sind solche Kombigeräte sind mit überschaubarem Aufwand realisierbar, weil die Einstellungen per Software einfach zeit- oder anwendungsorientiert eingestellt werden können und die Datenrate der Sendungen in einem weitem Bereich wählbar ist.

Diese Einstellungen könne beispielsweise zeitabhängig über den Timer des Mikroprozessors 2 oder über die Bedieneinheit 6 vorgenommen werden, die eine Tastatur, ein Display zum Darstellen einer Menüstruktur, eine spezielle Funktionstaste oder dergleichen aufweisen kann. Ferner kann die Bedieneinheit 6 eine Schnittstelle, beispielsweise eine Infrarotschnittstelle oder dergleichen, aufweisen, die einen Zugriff auf die in dem Mikroprozessor 2 implementierte Software für die Vornahme von Einstellungen erlaubt.

Die erfindungsgemäße Idee ermöglicht es, preiswerte, universell sowohl für eine stationäre als auch eine mobile Ablesung geeignete Verbrauchserfassungsgeräte 1 mit herausragenden Eigenschaften herzustellen. Insbesondere die Stromversorgung der Sender 4 der Verbrauchserfassungsgeräte 1 wird vereinfacht. Sie besteht lediglich aus der sowieso notwendigen Langzeitbatterie 7 mit parallelgeschaltetem Pufferkondensator 7. Pumpschaltungen, die komplex sind, die Kosten erhöhen und den Wirkungsgrad senken, sind nicht notwendig.

Die Aufteilung der Daten in mehrere Daten- bzw. Subtelegramme 5 und das Einhalten genau definierter zeitlicher Sequenzen (Zeitabstände zwischen der Aussendung zweier Subtelegramme) wird durch den vorhanden Mikroprozessor 2 per Software gesteuert. Der Aufwand dafür ist sehr überschaubar. Die erzielbare Reichweite lässt durch Variation der Datenrate und Modulationsfrequenz in weiten Grenzen einstellen. Dies kann zur Entwurfszeit (Entwicklung der Verbrauchserfassungsgeräte) oder im Betrieb durch Einstellung der Betriebssoftware erfolgen. Dadurch sind auch Kombigeräte mit sehr geringen Zusatzkosten realisierbar, die sowohl für eine stationäre als auch eine mobile Auslesung geeignet und einfach konfigurierbar sind. Dadurch sind einheitliche Geräte für unterschiedliche Anwendungen einsetzbar. Die geringe Anzahl von Gerätevarianten bringt zusätzliche Kostenvorteile in der Organisation.

**Bezugszeichenliste:**

1   Verbrauchserfassungsgerät
2   Mikroprozessor
3   Sensor
4   Sender
5   Datentelegramm, Subtelegramm
6   Bedieneinheit
7   Langzeitbatterie
8   Pufferkondensator

U   Versorgungsspannung

**Patentansprüche**

1.  Verfahren zur funkgestützten Übertragung von Daten in mehreren Datentelegrammen (5) von einem Sender (4) eines batteriebetriebenen Verbrauchserfassungsgeräts (1) zu einem Empfänger, wobei die Daten mit einer so niedrigen Datenrate übertragen werden, dass sie auf mehrere Datentelegramme (5) vorgegebener zeitlicher Länge aufgeteilt werden müssen, und aus der Datenrate und einer maximalen zeitlichen Länge des Datentelegramms die Anzahl der für die zu übertragenden Daten benötigten Datentelegramme bestimmt wird und wobei die von dem Sender (4) zur Aussendung eines Datentelegramms (5) benötigte Energie einem zuvor aufgeladenen Pufferkondensator (8) entnommen und der Pufferkondensator (8) zwischen der Aussendung zweier aufeinanderfolgender Datentelegramme (5) wieder aufgeladen wird, **dadurch gekennzeichnet, dass** die Datenrate durch ein gewünschtes, die Reichweite der Datentelegramme (5) bestimmendes Signal-zu-Rausch-Verhältnis im Empfänger festgelegt wird, dass die Datentelegramme (5) in einer genauen zeitlichen Abfolge gesendet werden, indem der Sender (4) eine genau definierte Zeit wartet, bevor er das nächste Datentelegramm (5) aussendet, und der Empfänger diese Zeit genau kennt, und dass das erste der mehreren Datentelegramme (5) einen Header mit Informationen zum Aufbau der Funkkommunikation, ein Syncwort zur Synchronisation des Starts der Übertragung von Nutzdaten und ggf. einen Teil der Nutzdaten enthält und dass die weiteren der mehreren Datentelegramme (5) einen gegenüber dem ersten Datentelegramm (5) verkürzten Header und einen vergrößerten Anteil an Nutzdaten enthalten.

2.  Verfahren nach Anspruch 1, **dadurch gekennzeichnet, dass** die Datenrate in einem Bereich zwischen etwa 2.000 bis 20.000 Bit/Sekunde liegt.

3.  Verfahren nach einem der vorhergehenden Ansprüche, **dadurch gekennzeichnet, dass** die zeitliche Länge der Datentelegramme (5) in einem Bereich zwischen etwa 5 bis 25 Millisekunden liegt.

4.  Verfahren nach einem der vorhergehenden Ansprüche, **dadurch gekennzeichnet, dass** die Datenrate zeit- und/oder anwendungsorientiert einstellbar ist.

5.  Verbrauchserfassungsgerät mit einem Mikroprozessor (2) mit Datenspeicher, in dem zu übertragende Daten gespeichert sind, mit einem an den Mikroprozessor (2) angeschlossenen Sender (4) zur Aussendung von Datentelegrammen (5) mit den zu übertragenden Daten, wobei die Daten in Datentelegrammen (5) vorgegebener zeitlicher Läge mit einer so niedrigen Datenrate übertragen werden, dass sie auf mehrere Datentelegramme (5) aufgeteilt werden müssen, mit einer Energieversorgung (7), insbesondere einer Langzeitbatterie, und mit einem Pufferkondensator (8) zur Versorgung des Senders (4) bei der Aussendung von Datentelegrammen (5), wobei die Aussendung der Datentelegramme (5) durch den Mikroprozessor (2) gesteuert und der Pufferkondesator (8) zwischen der Aussendung zweier aufeinanderfolgender Datentelegramme (5) wieder aufgeladen wird, **dadurch gekennzeichnet, dass** in den Mikroprozessor (2) ein Programm implementiert ist, welches die Datenrate anhand eines gewünschten, die Reichweite der Datentelegramme bestimmenden Signal-zu-Rauschverhältnisses festlegt und aus der Datenrate und einer maximalen zeitlichen Länge des Datentelegramms die Anzahl der für die zu übertragenden Daten benötigten Datentelegramme bestimmt, wobei die Datentelegramme (5) in einer genauen zeitlichen Abfolge gesendet werden, indem der Sender (4) eine genau definierte Zeit wartet, bevor er das nächste Datentelegramm (5) aussendet, wobei das erste der mehreren Datentelegramme (5) einen Header mit Informationen zum Aufbau der Funkkommunikation, ein Syncwort zur Synchronisation des Starts der Übertragung von Nutzdaten und ggf. einen Teil der Nutzdaten enthält und wobei die weiteren der mehreren Datentelegramme (5) einen gegenüber dem ersten Datentelegramm (5) verkürzten Header und einen vergrößerten Anteil an Nutzdaten enthalten.

**6.** Verbrauchserfassungsgerät nach Anspruch 5, **dadurch gekennzeichnet, dass** an das Verbrauchserfassungsgerät (1) ein Sensor (3) zur Erfassung eines Verbrauchswerts und/oder ein Empfänger zum Empfang von Datentelegrammen (5) angeschlossen ist.

**7.** Verbrauchserfassungsgerät nach einem der Ansprüche 6 oder 7, **gekennzeichnet durch** eine Bedieneinheit (6) zur Einstellung der Datenrate, insbesondere **durch** den Mikroprozessor (2).

**Claims**

**1.** Method for the radio-supported transmission of data in a plurality of datagrams (5) from a transmitter (4) of a battery-operated supply data acquisition device (1) to a receiver, wherein the data are transmitted at such a low data rate that they must be allocated to a plurality of datagrams (5) of predefined chronological length, and the number of the datagrams required for the data to be transmitted is determined from the data rate and a maximum chronological length of the datagrams, and wherein the energy required by the transmitter (4) for emitting a datagram (5) is taken from a previously charged buffer capacitor (8), and the buffer capacitor (8) is charged up again between the emission of two consecutive datagrams (5), **characterised in that** the data rate is defined by a desired signal-to-noise ratio in the receiver, which signal-to-noise ratio determines the range of the datagrams (5), that the datagrams (5) are sent in an exact chronological sequence **in that** the transmitter (4) waits an exactly defined time before emitting the next datagram (5), and the receiver knows exactly this time, and that the first of the plurality of datagrams (5) contains a header with information on the structure of the radio communication, a syncword for synchronising the start of the transmission of payload, and where necessary part of the payload, and that the others of the plurality of datagrams (5) contain a header which is shorter in comparison with the first datagram (5) and a larger proportion of payload.

**2.** Method according to Claim 1, **characterised in that** the data rate is in a range between approximately 2,000 and 20,000 bits/second.

**3.** Method according to one of the preceding claims, **characterised in that** the chronological length of the datagrams (5) is in a range between approximately 5 and 25 milliseconds.

**4.** Method according to one of the preceding claims, **characterised in that** the data rate can be adjusted in a time or application-oriented manner.

**5.** Supply data acquisition device with a microprocessor (2) with data storage in which data to be transmitted are stored, with a transmitter (4), which is connected to the microprocessor (2), for emitting datagrams (5) with the data to be transmitted, wherein the data are transmitted in datagrams (5) of predefined chronological length at such a low data rate that they must be allocated to a plurality of datagrams (5), with an energy supply (7), in particular a long-life battery, and with a buffer capacitor (8) for supplying energy to the transmitter (4) during the emission of datagrams (5), wherein the emission of datagrams (5) is controlled by the microprocessor (2) and the buffer capacitor (8) is charged up again between the emission of two consecutive datagrams (5), **characterised in that** a program is implemented in the microprocessor (2), which program defines the data rate using a desired signal-to-noise ratio, which determines the range of the datagrams, and determines the number of the datagrams required for the data to be transmitted from the data rate and a maximum chronological length of the datagram, wherein the datagrams (5) are sent in an exact chronological sequence **in that** the transmitter (4) waits an exactly defined time before emitting the next datagram (5), wherein the first of the plurality of datagrams (5) contains a header with information on the structure of the radio communication, a syncword for synchronising the start of the transmission of payload, and where necessary part of the payload, and wherein the others of the plurality of datagrams (5) contain a header which is shorter in comparison with the first datagram (5) and a larger proportion of payload.

**6.** Supply data acquisition device according to Claim 5, **characterised in that** a sensor (3) for acquiring a supply value and/or a receiver for receiving datagrams (5) is connected to the supply data acquisition device (1).

**7.** Supply data acquisition device according to one of Claims 6 or 7, **characterised by** an operating unit (6) for adjusting the data rate, in particular by means of the microprocessor (2).

## Revendications

**1.** Procédé pour la transmission commandée par radio de données dans plusieurs télégrammes de données (5) par un émetteur (4) d'un appareil d'enregistrement de consommation (1) exploité sur batterie à un récepteur, les données étant transmises avec un débit de données si faible qu'elles doivent être réparties entre plusieurs télégrammes de données (5) présentant une longueur de temps prédéfinie, et le nombre des télégrammes de données utilisés pour les données à transmettre est déterminé à partir du débit de données et d'une longueur dans le temps maximale du télégramme de données et l'énergie utilisée par l'émetteur (4) pour envoyer un télégramme de données (5) étant prélevée sur un condensateur tampon (8) chargé auparavant et le condensateur tampon (8) étant rechargé entre l'émission de deux télégrammes de données (5) consécutifs, **caractérisé en ce que** le débit de données est défini par un rapport signal-bruit souhaité, déterminant la portée des télégrammes de données (5), **en ce que** les télégrammes de données (5) sont envoyés dans un ordre chronologique précis du fait que l'émetteur (4) attend un temps défini de façon précise avant qu'il envoie le prochain télégramme de données (5), et le récepteur connaît précisément ce temps, et **en ce que** le premier des plusieurs télégrammes de données (5) contient une en-tête avec des informations sur la structure de la communication radio, un mot de synchronisation pour la synchronisation du démarrage de la transmission des données utiles et éventuellement une partie de données utiles et **en ce que** les autres des plusieurs télégrammes de données (5) contiennent une en-tête raccourcie par rapport au premier télégramme de données (5) et une fraction agrandie de données utiles.

**2.** Procédé selon la revendication 1, **caractérisé en ce que** le débit de données se situe dans une plage comprise entre environ 2.000 et 20.000 bits/seconde.

**3.** Procédé selon l'une quelconque des revendications précédentes, **caractérisé en ce que** la longueur dans le temps des télégrammes de données (5) se situe dans une plage comprise entre environ 5 et 25 millisecondes.

**4.** Procédé selon l'une quelconque des revendications précédentes, **caractérisé en ce que** le débit de données est réglable en étant axé sur le temps et/ou l'application.

**5.** Appareil d'enregistrement de consommation comprenant un microprocesseur (2) avec mémoire de données, dans laquelle des données à transmettre sont stockées, un émetteur (4) raccordé au microprocesseur (2) pour l'envoi de télégrammes de données (5) avec les données à transmettre, les données étant transmises dans des télégrammes de données (5) de longueur de temps prédéfinie avec un débit de données si faible qu'elles doivent être réparties entre plusieurs télégrammes de données (5), une alimentation en énergie (7), en particulier une batterie de longue durée, et un condensateur tampon (8) pour alimenter l'émetteur (4) lors de l'envoi de télégrammes de données (5), l'envoi des télégrammes de données (5) étant commandé par le microprocesseur (2) et le condensateur tampon (8) étant rechargé entre l'envoi de deux télégrammes de données (5) consécutifs, **caractérisé en ce qu'**un programme est mis en place dans le microprocesseur (2), lequel programme définit le débit de données à l'aide d'un rapport signal-bruit souhaité, déterminant la portée des télégrammes de données, et détermine à partir du débit de données et d'une longueur de temps maximale du télégramme de données le nombre des télégrammes de données utilisés pour les données à transmettre, les télégrammes de données (5) étant envoyés dans une succession chronologique précise, du fait que l'émetteur (4) attend un temps défini de façon précise avant qu'il envoie le prochain télégramme de données (5), le premier des plusieurs télégrammes de données (5) contenant une en-tête avec des informations sur la structure de la communication radio, un mot de synchronisation pour la synchronisation du démarrage de la transmission de données utiles et éventuellement une partie de données utiles et les autres des plusieurs télégrammes de données (5) contenant une en-tête raccourcie par rapport au premier télégramme de données (5) et une fraction augmentée de données utiles.

**6.** Appareil d'enregistrement de consommation selon la revendication 5, **caractérisé en ce qu'**à l'appareil d'enregistrement de consommation (1) est raccordé un capteur (3) pour l'enregistrement d'une valeur de consommation et/ou un émetteur pour l'envoi de télégrammes de données (5).

**7.** Appareil d'enregistrement de consommation selon l'une quelconque des revendications 6 ou 7, **carac-**

**térisé par** une unité de commande (6) pour le réglage du débit de données, en particulier par le microprocesseur (2).

## Fig.1

## Fig.2

| Sequenz | Inhalt | Länge [Bytes] | Kommentar |
|---------|--------|---------------|-----------|
| 1 | Preheader | 50 | Synchronisation des Empfängers.<br>- Einschwingen der Empfangsschaltung<br>- evtl. Frequenzsuche und Selektion<br>- evtl. „tastender" batteriebetriebener Empfänger |
| 1 | Syncwort | 2 | Synchronisation zum Start des Telegrammes „jetzt geht's los" |
| 1 | Nutzdaten | 50 | Dateninhalte |

**Fig. 3**

| Sequenz | Inhalt | Länge [Bytes] | Kommentar |
|---------|--------|---------------|-----------|
| 1 | Preheader | 50 | Synchronisation des Empfängers.<br>- Einschwingen der Empfangsschaltung<br>- evtl. Frequenzsuche und Selektion<br>- evtl. „tastender" batteriebetriebener Empfänger |
| 1 | Syncwort | 2 | Synchronisation zum Start des Telegrammes „jetzt geht's los" |
| 1 | Nutzdaten | 5 | Dateninhalte |
| Pause | | | |
| 2 | Preheader | 50 | Synchronisation des Empfängers.<br>- Einschwingen der Empfangsschaltung<br>- evtl. Frequenzsuche und Selektion<br>- evtl. „tastender" batteriebetriebener Empfänger |
| 2 | Syncwort | 2 | Synchronisation zum Start des Telegrammes „jetzt geht's los" |
| 2 | Nutzdaten | 5 | Dateninhalte |
| Pause | | | |
| ... | ... | ... | ... |
| 10 | Preheader | 50 | Synchronisation des Empfängers.<br>- Einschwingen der Empfangsschaltung<br>- evtl. Frequenzsuche und Selektion<br>- evtl. „tastender" batteriebetriebener Empfänger |
| 10 | Syncwort | 2 | Synchronisation zum Start des Telegrammes „jetzt geht's los" |
| 10 | Nutzdaten | 5 | Dateninhalte |

**Fig. 4**

| Sequenz | Inhalt | Länge [Bytes] | Kommentar |
|---|---|---|---|
| 1 | Preheader | 50 | Synchronisation des Empfängers.<br>- Einschwingen der Empfangsschaltung<br>- evtl. Frequenzsuche und Selektion<br>- evtl. „tastender" batteriebetriebener Empfänger |
| 1 | Syncwort | 2 | Synchronisation zum Start des Telegrammes „jetzt geht's los" |
| 1 | Nutzdaten | 5 | Dateninhalte |
| Pause | | | Genau 1000ms |
| 2 | Kurzer Pre-header | 1 | Synchronisation des Empfängers.<br>- Einschwingen der Empfangsschaltung |
| 2 | Syncwort | 2 | Synchronisation zum Start des Telegrammes „jetzt geht's los" |
| 2 | Nutzdaten | 50 | Dateninhalte |

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5844942 A
- EP 0674400 B1
- EP 0613257 A2
- DE 29605699 U1
- EP 0674400 A1
- US 20030123406 A1
- RU 2107996 C1